# EUROPEAN PATENT APPLICATION

(11) **EP 1 879 133 A1**
(43) Date of publication of application: **16.01.2008**
(21) Application number: 06730993.0
(22) Date of filing: 03.04.2006
(51) Int. Cl.: G06K 17/00

(54) **INFORMATION MANAGING UNIT AND INFORMATION MANAGING METHOD**

(30) Priority: 11.04.2005 JP 2005113733
(71) Applicant: NTT DoCoMo Inc., Chiyoda-Ku Tokyo 100-6150 (JP)
(72) Inventor: MIZUKI, Atsushi IP NTT DoCoMo Inc., Chiyoda-ku Tokyo 1006150 (JP); SUGIYAMA, Toshiharu IP NTT DoCoMo, Chiyoda-ku Tokyo 1006150 (JP); HAGINO, Hiroaki IP NTT DoCoMo Inc., Chiyoda-ku Tokyo 1006150 (JP); TAKAHASHI, Tatsuo IP NTT DoCoMo Inc., Chiyoda-ku Tokyo 1006150 (JP); YAMAZAKI, Kenichi IP NTT DoCoMo Inc., Chiyoda-ku Tokyo 1006150 (JP)
(74) Representative: GROSSE BOCKHORNI SCHUMACHER
(86) International application number: PCT/JP2006/307045
(87) International publication number: WO 2006/109606

(57) **Abstract**

An information managing unit (4) has an ID information storage (41) for receiving and storing ID information (11) from an RFID reader (2) for detecting, from an RFID tag (1) holding variable ID information (11), the ID information (11) and for updating and managing the stored ID information (11) in synchronization with the variable ID information (11) held by the RFID tag (1), by a predetermined method; an event detector (42) for detecting an event to be a trigger to notify another information managing unit (5) of the stored ID information (11); and an ID information requester (43) for, when the event is detected, notifying the other information managing unit (5) of the ID information (11), for acquiring the ID information (11) and managing unit information about the other information managing unit (5) from the other information managing unit (5), and for storing the acquired managing unit information in correspondence to the ID information (11) into the ID information storage (41).

## Description

### Technical Field

A present invention relates to information managing unit and information managing method.

### Background Art

In recent years, a variety of services have been proposed using RFID tags attached to articles, and readers for reading information held (or stored) by the RFID tags (which will be referred to as "RFID readers" in the present specification).

For example, Non-patent Document 1 below proposes a logistics managing unit and logistics managing method using the RFID tags. According to this technology, a manufacturer installs RFID readers in factories, trucks, etc. and each RFID reader transmits radio waves periodically. When an RFID reader detects an RFID tag located within a predetermined reading range, it acquires ID information held by the RFID tag. This ID information is associated with information of an article to which the RFID tag is attached, in an information storage device managed by the manufacturer. The manufacture can find out when and where the article was detected, by associating this information of the article with location information of the RFID reader having detected the RFID tag and with a time of detection at the location.

However, there are concerns about the problem of invasion of privacy of the user by the RFID tag. For example, let us assume a case where a user purchases an article with an RFID tag holding ID information and thereafter another malicious user reads the ID information associated with the article. Thereafter, this other malicious user reads the ID information and thereby finds out that the article is located near the reading location. If the article is an article that is always carried by the user, e.g., a wallet or the like, the other malicious user can recognize that the user is near, using the ID information. If the RFID readers will be installed everywhere in the near future, the other malicious user as described above could monitor the location of the user.

Conventionally, there are proposals on techniques for solving the privacy invasion problem as described above. For example, Patent Document 1 below solved the above problem by allowing the user to rewrite the ID information held by the RFID tag, into false ID information.
"Non-patent Document 1" is "The EPC global Network™: Overview of Design, Benefits, & Security" (http://www.epcglobalinc.org/) September 24, 2004.
"Patent Document 1" is Japanese Patent Application Laid-Open Gazette of JP 2004-192645.

### Disclosure of the Invention

### Problem to be Solved by the Invention

However, the information managing method according to the above-described conventional technology had the problem as described below. Namely, any RFID reader other than the RFID readers permitted to read the ID information by the user cannot acquire the correct ID information held by the RFID tag owned by the user. For example, if the user loses the article with the RFID tag, only the RFID readers permitted by the user can read the ID information held by the RFID tag, and there was thus the problem that when the article was located outside the reading ranges of the RFID readers permitted by the user, the article was not found.

The present invention has been accomplished in order to solve the above problem and an object of the present invention is to provide information managing unit and information managing method capable of readily performing a user's search for a lost article while ensuring the privacy of the user.

### Means for Solving the Problem

An information managing unit according to the present invention is an information managing unit comprising: an ID information storage for receiving and storing detected ID information from an RFID reader for detecting, from an RFID tag holding variable ID information, the ID information, and for updating and managing the stored ID information in synchronization with the variable ID information held by the RFID tag, by a predetermined method; an event detector for detecting an event to be a trigger to notify an other information managing unit of the ID information stored in the ID information storage; and an ID information requester for notifying the other information managing unit of the ID information when the event detector detects the event, for acquiring the ID information and predetermined managing unit information about the other information managing unit from the other information managing unit, and for storing the acquired managing unit information in correspondence to the ID information into the ID information storage.

The information managing unit operates as a sender of the ID information. On the other hand, an information managing unit operating as a receiver of the ID information can be configured as described below.

An information managing unit according to the present invention is an information managing unit comprising: an ID information storage for receiving and storing detected ID information from an RFID reader for detecting, from an RFID tag holding variable ID information, the ID information; a managing unit information storage for storing predetermined managing unit information about the host information managing unit; and an ID information responder for, when ID information is notified of by an other information managing unit, checking whether the ID information is stored in the ID information storage, and for, when the ID information is stored, notifying the other information managing unit of the managing unit information stored in the managing unit information storage, and the ID information.

The present invention as described above permits the following operation: in a case where the user loses an article with an RFID tag owned by the user and cannot detect it by the RFID reader owned by the user, the user will find the lost article of its own if the ID information of the RFID tag attached to the lost article of its own is detected by the RFID reader owned by another user and is held in the ID information storage thereof.

Since the ID information is variable by the predetermined method, it prevents another user from monitoring the user, using the ID information as a key, and thus ensures the privacy of the user.

Since the information managing unit operating as a sender of ID information is configured so that the ID information storage updates and manages the stored ID information in synchronization with the variable ID information held by the RFID tag, even if the user loses the article with the RFID tag and cannot detect it by the RFID reader owned by the user, the user can notify another information managing unit of up-to-date ID information resulting from change after the loss of the article.

A single information managing unit may comprise both of the configuration of the information managing unit operating as a sender of ID information and the configuration of the information managing unit operating as a receiver of ID, information, and this information managing unit can operate as a sender of ID information at a certain point and operate as a receiver of ID information at another point.

Incidentally, the configuration of the information managing unit operating as a sender of ID information is preferably arranged as described below.

Specifically, the information managing unit of the present invention operating as a sender of ID information is preferably configured as follows: it further comprises an inquiry target storage for storing input inquiry target information; and an inquiry target controller for notifying the ID information requester of the inquiry target information stored in the inquiry target storage, and ID information in correspondence to each other, thereby requesting an inquiry to the inquiry target.

In this case, the user is allowed to preliminarily register an inquiry target that the user desires to search for the ID information, which enables an inquiry focused on the preliminarily registered inquiry target and which can reduce traffic volume on a communication network.

The information managing unit of the present invention operating as a sender of ID information is preferably configured as follows: it further comprises an ID information controller for notifying the ID information requester of input ID information; the ID information requester notifies the other information managing unit of the ID information notified of by the ID information controller.

In this case, the user is allowed to enter the ID information to definitely designate an article that the user desires to find, which can reduce the traffic volume on the communication network.

The information managing unit of the present invention operating as a sender of ID information is preferably configured as follows: the ID information received from the RFID reader is encrypted ID information resulting from encryption of the ID information; the ID information requester comprises: a decryptor for decrypting the received encrypted ID information to acquire the ID information; and an encryptor for encrypting the ID information decrypted by the decryptor, to acquire encrypted ID information; when the event detector detects the event, the ID information requester notifies the other information managing unit of the encrypted ID information encrypted by the encryptor, acquires the encrypted ID information and predetermined managing unit information about the other information managing unit from the other information managing unit, and stores the acquired managing unit information in correspondence to the ID information obtained by decryption of the acquired encrypted ID information by the decryptor, into the ID information storage.

In the aspect using the encrypted ID information as described above, the information managing unit of the present invention operating as a receiver of ID information is preferably configured as follows: the ID information received from the RFID reader is encrypted ID information resulting from encryption of the ID information; the ID information responder further comprises: a decryptor for decrypting the received encrypted ID information to acquire the ID information; and an encryptor for encrypting the ID information decrypted by the decryptor, to acquire encrypted ID information; when the encrypted ID information is notified of by the other information managing unit, the ID information responder decrypts the encrypted ID information by the decryptor to acquire the ID information, and checks whether the ID information is stored in the ID information storage, and, when the ID information is stored, the ID information responder notifies the other information managing unit of the managing unit information stored in the managing unit information storage and the encrypted ID information resulting from the encryption by the encryptor.

In the aspect using the encrypted ID information as described above, the whole of the encrypted ID information appears variable to third parties, and thus the privacy can be ensured for the user owning the article with the RFID tag storing the encrypted ID information.

The information managing unit of the present invention operating as a sender of ID information is preferably configured as follows: it further comprises an ID information determiner for determining whether the ID information detected by the RFID reader is stored in the ID information storage; when the ID information determiner determines that the detected ID information is not stored in the ID information storage, the ID information requester notifies an external ID information storage device storing the managing unit information in correspondence to the ID information, of the ID information, acquires the ID information and the managing unit information associated with the ID information from the external ID information storage device, and stores the acquired managing unit information in correspondence to the ID information into the ID information storage.

The above makes it feasible to determine whether the ID information detected by the RFID reader (ID information held by the RFID tag) is the ID information owned by the information managing unit itself. For this reason, when the ID information not owned by the information managing unit itself is notified to the outside, the user having the ID information can find the ID information with a high probability. When the user searches for an article owned by the user, the user inquires of the ID information storage about the ID information of the RFID tag attached to the article, and thereby can find its own article, which increases the probability of finding of the ID information. Furthermore, when the user searches for an article owned by the user, it does not have to inquire of other users about the ID information of the RFID tag attached to the article, which can reduce the traffic volume on the communication network.

The information managing unit of the present invention operating as a sender of ID information is preferably configured as follows: the ID information storage further stores predetermined multiple-generation pieces of ID information in updates of the variable ID information, in correspondence to the ID information; the ID information requester notifies the ID information responder of the ID information and the multiple-generation pieces of ID information.

The above makes it feasible to avoid, to some extent, an error between the ID information notified of by a certain information managing unit and the ID information detected by another information managing unit, which is caused by the updates of the ID information held by the same RFID tag. In addition, it becomes unnecessary to notify the other information managing unit of the ID information updated periodically, upon every update, which can reduce the communication traffic volume.

The above showed the aspects of the present invention described as the invention of the information managing unit, but the present invention can also be described as the invention of information managing method, with the same action and effect.

Specifically, an information managing method according to the present invention for operation as a sender of ID information is an information managing method in an information managing unit with an ID information storage for receiving and storing detected ID information from an RFID reader for detecting, from an RFID tag holding variable ID information, the ID information and for updating and managing the stored ID information in synchronization with the variable ID information held by the RFID tag, by a predetermined method, the information managing method comprising: an event detecting step of detecting an event to be a trigger to notify an other information managing unit of the ID information stored in the ID information storage; an ID information notifying step of, when the event is detected in the event detecting step, notifying the other information managing unit of the ID information; a managing unit information acquiring step of acquiring the ID information, and predetermined managing unit information about the other information managing unit from the other information managing unit; and a managing unit information storing step of storing the acquired managing unit information in correspondence to the ID information into the ID information storage.

An information managing method according to the present invention for operation as a receiver of ID information is an information managing method in an information managing unit with an ID information storage for receiving and storing detected ID information from an RFID reader for detecting, from an RFID tag holding variable ID information, the ID information, and a managing unit information storage for storing predetermined managing unit information about the host information managing unit, the information managing method comprising: a checking step of, when ID information is notified of by an other information managing unit, checking whether the ID information is stored in the ID information storage; and an ID information responding step of, when the ID information is stored, notifying the other information managing unit of the managing unit information stored in the managing unit information storage, and the ID information.

### Effect of the Invention

The present invention permits the following operation: when the user loses an article with an RFID tag owned by the user and cannot detect it by an RFID reader owned by the user, the user can find the lost article as long as an RFID reader owned by another user can detect the ID information of the RFID tag. The invention also prevents another user from monitoring the user, using the ID information as a key, which ensures the privacy of the user.

### Brief Description of the Drawings

Fig. 1 is a system configuration diagram of the first embodiment.
Fig. 2 is a drawing showing an example of ID information management table 41a.
Fig. 3 is a flowchart showing a processing procedure in the first embodiment.
Fig. 4 is a system configuration diagram of the second embodiment.
Fig. 5 is a drawing showing an example of inquiry target management table 44a.
Fig. 6 is a flowchart showing a processing procedure in the second embodiment.
Fig. 7 is a system configuration diagram of the third embodiment.
Fig. 8 is a flowchart showing a processing procedure in the third embodiment.
Fig. 9 is a system configuration diagram of the fourth embodiment.
Fig. 10 is a flowchart showing a processing procedure in the fourth embodiment.
Fig. 11 is a drawing showing a configuration example of ID information 11 in the fourth embodiment.
Fig. 12 is a system configuration diagram of the fifth embodiment.
Fig. 13 is a flowchart showing a processing procedure associated with determination on ID information in the fifth embodiment.
Fig. 14 is a drawing showing a configuration example of ID information 11 in the fifth embodiment.
Fig. 15 is a flowchart showing a processing procedure associated with acquisition of ID information in the fifth embodiment.
Fig. 16 is a drawing showing an example of ID information management table 41 a in the sixth embodiment.

### Description of Reference Symbols

1 is for RFID tag; 11 is for ID information; 11a is for information part; 11b is for time stamp part; 11c is for user ID part; 12 is for update circuit; 13 is for encrypted information; 2 is for RFID reader; 3 is for RFID reader; 4 is for sender ID information managing unit; 41 is for ID information storage; 41a is for ID information management table; 41b is for update circuit; 42 is for event information; 43 is for ID information requester; 44 is for inquiry target storage; 44a is for inquiry target management table; 45 is for inquiry target controller; 46 is for ID information controller; 47a is for decryptor; 47b is for encryptor; 48 is for encrypted information requester; 49 is for ID information determiner; 5 is for receiver ID information managing unit; 51 is for ID information storage; 51 a is for ID information management table; 52 is for managing unit information; 53 is for ID information responder; 54a is for decryptor; 54b is for encryptor; 55 is for encrypted information responder; 6 is for inquiry target input part; 7 is for ID information input part; 8 is for ID information storage; 8a is for ID information management table.

### Best Mode for Carrying out the Invention

Embodiments of the present invention will be described below with reference to the drawings.

### [First Embodiment]

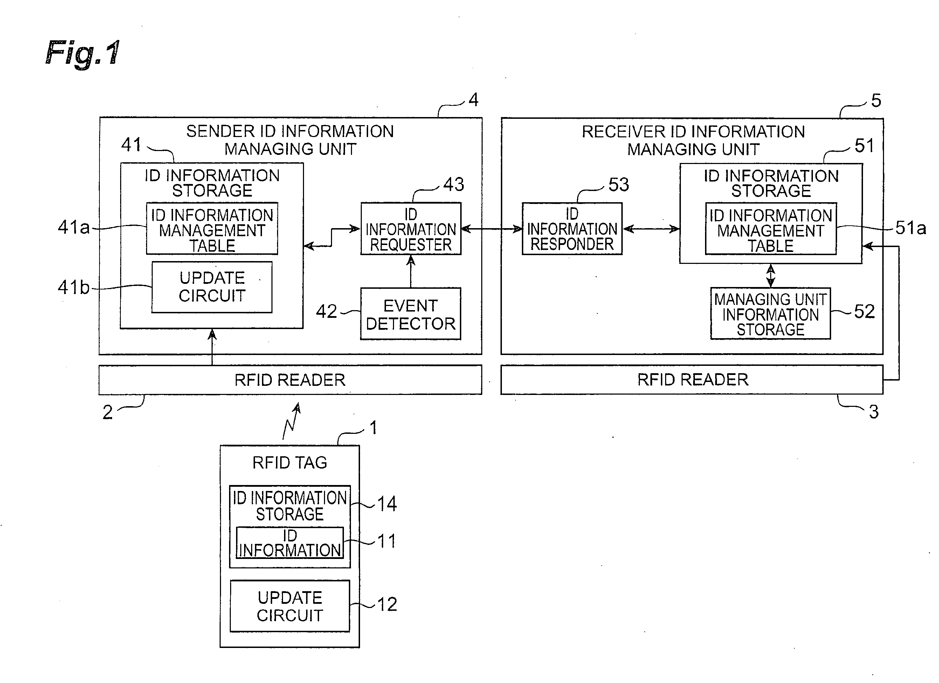

First, a configuration of information managing unit according to the present embodiment will be described. Fig. 1 is a configuration diagram of a system comprised of sender ID information managing unit 4 and receiver ID information managing unit 5 corresponding to the information managing unit according to the present embodiment, and peripheral devices thereof. The system, as shown in Fig. 1, is composed of RFID tag 1 attached to every article, RFID readers 2, 3 installed everywhere or carried by users, sender ID information managing unit 4 associated in one-to-one correspondence with the RFID reader 2, and receiver ID information managing unit 5 associated in one-to-one correspondence with the RFID reader 3.

The RFID tag 1 is composed of ID information storage 14 storing ID information 11 to identify the RFID tag 1, and update circuit 12 for periodically updating the ID information 11.

The sender ID information managing unit 4 is composed of ID information storage 41 having below-described functions for, when the RFID reader 2 detects ID information 11 held by an RFID tag 1, storing the ID information 11 and for establishing synchronization with variable ID information 11 held by a specific RFID tag 11; event detector 42 for detecting a below-described event to be a trigger for the sender ID information managing unit 4 to request the receiver ID information managing unit 5 to search for ID information 11; and ID information requester 43 for notifying the receiver ID information managing unit 5 of the ID information 11 and for acquiring the ID information 11 and below-described managing unit information about the receiver ID information managing unit 5 from the receiver ID information managing unit 5 and for storing the information into the ID information storage 41.

The receiver ID information managing unit 5 is composed of ID information storage 51 having below-described functions for, when the RFID reader 3 detects ID information 11 held by an RFID tag 1, storing the ID information 11 and for establishing synchronization with variable ID information 11 held by a specific RFID tag 11; managing unit information storage 52 storing managing unit information for identifying the receiver ID information managing unit 5 and for indicating a state of the receiver ID information managing unit 5; and ID information responder 53 for, when ID information 11 is notified of by the sender ID information managing unit 4, checking whether the ID information 11 is stored in the ID information storage 51, and for, when the ID information 11 is stored, notifying the sender ID information managing unit 4 of the ID information 11 and managing unit information.

The ID information storage 41 is composed of ID information management table 41a storing ID information 11 and managing unit information in correspondence to each other, and update circuit 41b for periodically updating the ID information 11.

The ID information storage 51 is composed of ID information management table 51a storing ID information 11 and managing unit information in correspondence to each other. It is a matter of course that the ID information storage 51 may have update circuit 41b for periodically updating the ID information 11, as the ID information storage 41 has.

The "event" to be a trigger for the sender ID information managing unit 4 to request the receiver ID information managing unit 5 to search for ID information 11 is preferably an occasion when the RFID reader 2 acquires new ID information 11, an occasion when the update circuit 41b in the ID information storage 41 is activated to update the ID information 11 stored in the ID information management table 41 a, or the like, and these events are detected by the event detector 42.

The "managing unit information" about the receiver ID information managing unit 5 is preferably an IP address for communication with the receiver ID information managing unit 5, location information of the RFID reader 3 associated with the receiver ID information managing unit 5, or the like. When an IP address is adopted as the managing unit information, the IP address enables communication with a physically separate ID information managing unit. When the location information of RFID reader 3 is adopted as the managing unit information, an owner of the sender ID information managing unit 4 acquires the location information of the RFID reader 3 whereby the owner can find out where the ID information managing unit 4 detected the ID information attached to the RFID tag 11 of the owner. A detectable range of RFID tag 1 by the RFID reader 3 is basically about several meters, though it depends upon the capability and using frequency band of the RFID reader 3, and so on. Therefore, a distance is about several meters between the location of the RFID reader 3 and the location of the RFID tag 1 detected by the RFID reader 3, and it follows that the location information of the RFID reader 20 can be regarded as the location information of the RFID tag 1.

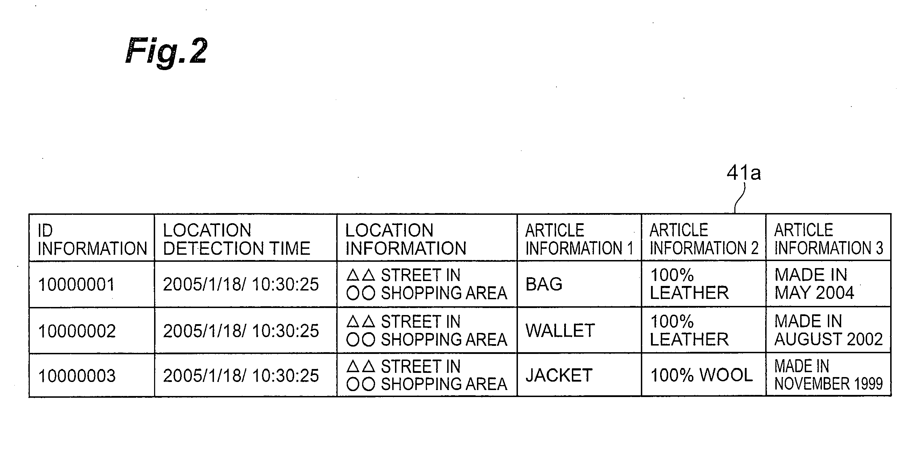

Fig. 2 is a drawing showing an example of the ID information management table 41 a. As shown in Fig. 2, the ID information management table 41a may store the ID information 11 and managing unit information (e.g., the location information of RFID reader 2) and further store a time of detection of the ID information 11 by the RFID reader 2, in correspondence thereto.

Since an RFID tag 1 is attached to a specific article, it can be considered that the RFID tag 1 is associated in one-to-one correspondence with one article. Therefore, the ID information 11 held by the RFID tag 1 may be associated with information of the article. Specifically, the ID information management table 41a is preferably arranged to further store the article information in correspondence, in addition to the ID information 11, the managing unit information, and the detection time of the ID information 11 by the RFID reader 3. In this case, the article information can be acquired by such methods as a method of letting a user manually input the information through an input device, and a method of acquiring the information from a manufacturer or the like managing the article information.

A configuration similar to Fig. 2 may also be adopted for the ID information management table 51a.

The following will describe the function of the ID information storage 41 for establishing synchronization between the ID information held by the ID information storage 41 and variable ID information 11 held by a specific RFID tag 11. In a case where the RFID tag 1 and ID information managing unit 4 are owned by the same owner, the update circuit 12 and the update circuit 41b are configured to update the ID information at the same timing so as to keep identical ID information 11 after the update. For example, the following configuration is preferably adopted: the update circuit 12 multiplies the ID information 11 by a hash function common to the update circuit 41b, after a lapse of a fixed period of time, and the update circuit 41b also multiplies the ID information stored in the ID information management table 41 a, by the foregoing common hash function after a lapse of the same fixed period of time.

The RFID reader 2 is preferably mounted on a portable terminal carried by the user.

Subsequently, the operation of the information managing unit according to the present invention will be described, while also describing an information managing method according to an embodiment of the present invention.

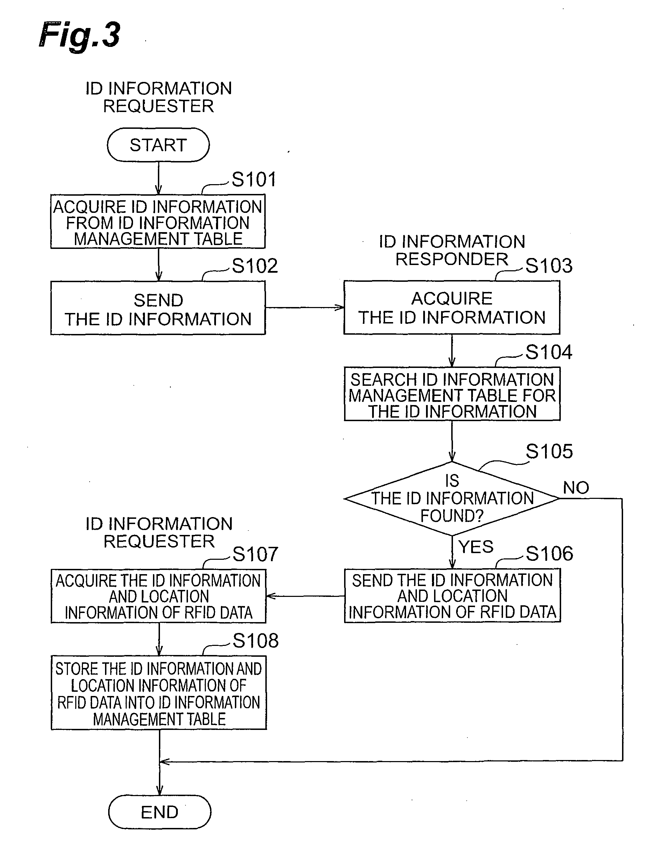

Fig. 3 is a drawing showing an example of a procedure of inquiring of the receiver ID information managing unit 5 about ID information 11 owned by the sender ID information managing unit 4 and acquiring the location information of an article with an RFID tag 1 storing the ID information 11. When the sender ID information managing unit 4 detects the aforementioned event by the event detector 42, the processing of Fig. 3 is initiated. The ID information requester 43 notified of an event detection signal by the event detector 42 acquires ID information 11 from the ID information management table 41a (S101), and notifies the ID information responder 53 in the receiver ID information managing unit 5 of the ID information 11 (S102). The ID information responder 53 acquires the ID information 11 (S103) and then checks whether the ID information 11 is stored in the ID information management table 51 a (S 104). If the ID information 11 is not stored in the ID information management table 51 a (No in S105), the processing is terminated. On the other hand, when the ID information 11 is stored in the ID information management table 51a (Yes in S105), the ID information responder 53 notifies the ID information requester 43 of the ID information 11, and managing unit information (the location information of the RFID reader 3 herein) stored in the ID information management table 51a (S106). The ID information requester 43 acquires the ID information 11 and managing unit information (location information of RFID reader 3) from the ID information responder 53 (S107) and thereafter stores these pieces of ID information 11 and managing unit information (location information of RFID reader 3) into the ID information management table 41a (S108).

The following will describe the effect of the information managing method and information managing unit according to the present embodiment. When a user loses an article with the RFID tag 1 owned by the user and fails to detect the tag by the RFID reader 20 owned by the user, the ID information 11 of the RFID tag 10 is detected by the RFID reader 20 owned by another user, whereby the user can find the lost article.

Since the ID information is variable by the predetermined method, it prevents another user from monitoring the user, using the ID information as a key, which ensures the privacy of the user.

### [Second Embodiment]

The information managing unit of the second embodiment will be described below. The information managing unit of the second embodiment is one obtained by changing and adding some portions in comparison with the configuration of the information managing unit of the above-described first embodiment, and the changed and added portions will be described below.

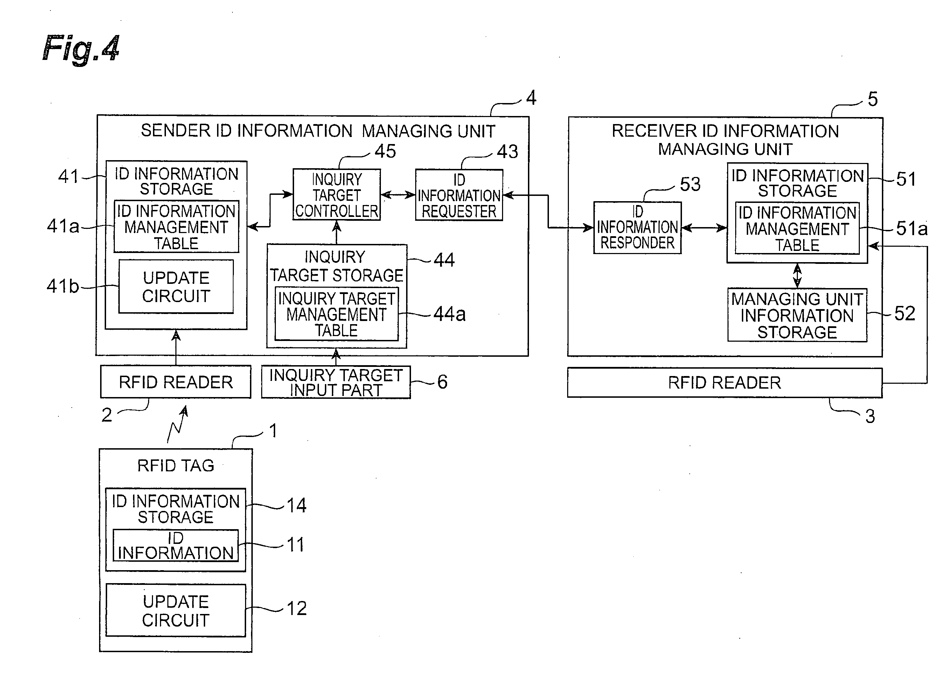

Fig. 4 is a configuration diagram of a system comprised of sender ID information managing unit 4 and receiver ID information managing unit 5 corresponding to the information managing unit in the present embodiment, and peripheral devices thereof. As shown in Fig. 4, the sender ID information managing unit 4 further comprises inquiry target storage 44 for storing target addresses that the user desires to search, and inquiry target controller 45 for notifying the receiver ID information managing unit 5 of ID information 11 and a target address in correspondence.

The system is further provided with inquiry target input part 6 for letting the user designate the receiver ID information managing unit 5 for notification of the ID information 11.

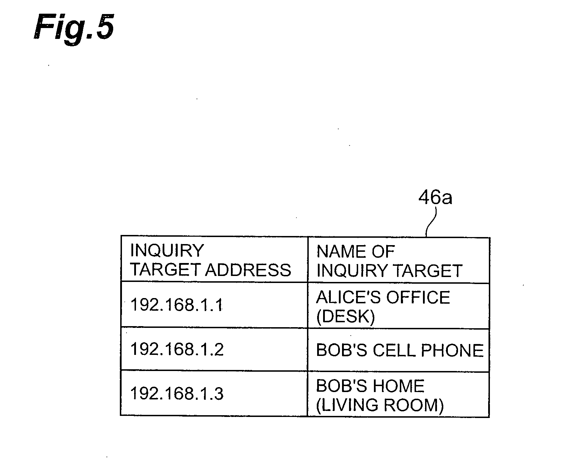

The inquiry target storage 44 is equipped with inquiry target management table 44a storing target addresses that the user desires to search. Fig. 5 is a drawing showing an example of the inquiry target management table 44a. As shown in this Fig. 5, the inquiry target addresses are preferably, for example, IP addresses.

As shown in Fig. 5, the inquiry target addresses are preferably managed in correspondence with comprehensible information such as names of inquiry targets. The inquiry target input part 6 is preferably mounted on a portable terminal (e.g., carriable RFID reader 2) carried by the user.

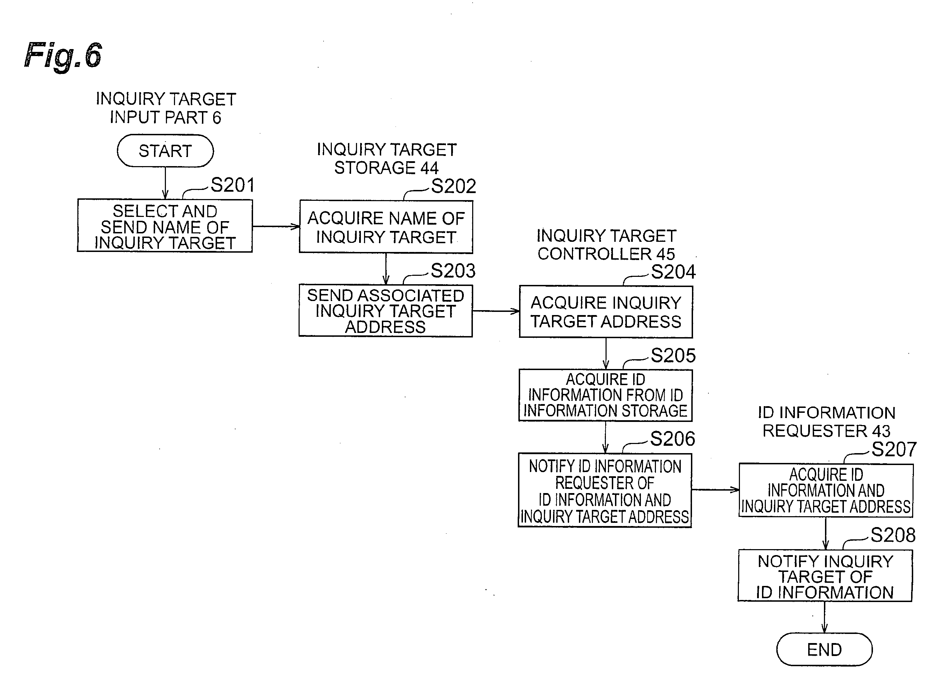

The following will describe the operation of the information managing unit and information managing method according to the second embodiment. Fig. 6 is a drawing showing an example of a procedure for, after input of an inquiry target by the user, notifying the inquiry target of the ID information 11. When the user selects a name of an inquiry target, using the inquiry target input part 6, the inquiry target input part 6 notifies the inquiry target storage 44 of the name of the inquiry target (S201). When the inquiry target storage 44 acquires the name of the inquiry target from the inquiry target input part 6 (S202), it notifies the inquiry target controller 45 of the name of the inquiry target and the corresponding inquiry target address held in the inquiry target management table 44a (S203). When the inquiry target controller 45 acquires the inquiry target address from the inquiry target storage 44 (S204), it acquires the ID information 11 from the ID information storage 41 (S205) and notifies the ID information requester 43 of the acquired ID information 11 and inquiry target address (S206). When the ID information requester 43 acquires the ID information 11 and inquiry target address (S207), it notifies the inquiry target of the ID information 11, using the acquired inquiry target address (S208).

Since in the processing of Fig. 6 the user's input into the inquiry target input part 6 (selection of the name of the inquiry target) is an event (a trigger for notification from the ID information requester 43 to the receiver ID information processor 5), there is no need for detection of another event in the second embodiment.

The following will describe the effect of the information managing method and information managing unit according to the present embodiment. Since the user is allowed to preliminarily register targets for search for the ID information 11, the user selects the notification target by the user upon loss of an article with the RFID tag 20 storing the ID information 11, so as to limit the number of notification targets, which can reduce the traffic volume on the communication network.

### [Third Embodiment]

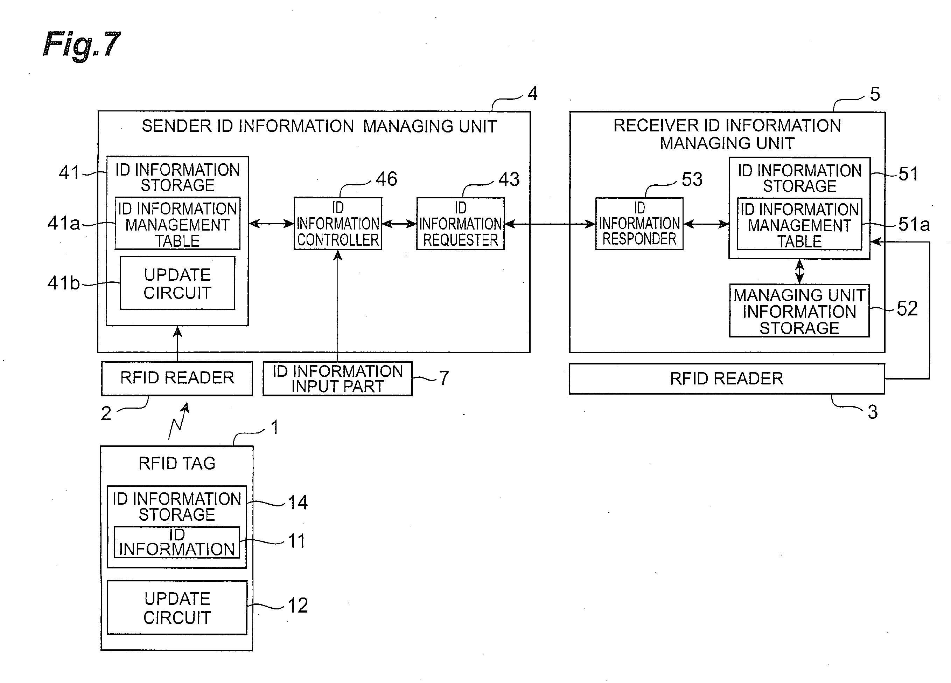

Subsequently, the information managing unit of the third embodiment will be described. The information managing unit of the third embodiment is one obtained by changing and adding some portions in comparison with the configuration of the information managing unit of the above-described first embodiment, and the changed and added portions will be described below. Fig. 7 is a configuration diagram of a system comprised of sender ID information managing unit 4 and receiver ID information managing unit 5 corresponding to the information managing unit in the present embodiment, and peripheral devices thereof. As shown in this Fig. 7, the sender ID information managing unit 4 further comprises ID information controller 46 for notifying the ID information requester 43 of ID information 11 stored in an RFID tag 1 attached to an article, and the ID information requester 43 notifies the receiver ID information managing unit 5 of the ID information notified of by the ID information controller 46.

The system is also provided with ID information input part 7 for letting the user enter ID information 11 corresponding to an article that the user desires to search for (i.e., ID information 11 stored in the RFID tag 1 attached to the article that the user desires to search for). This ID information input part 7 is preferably mounted on a portable terminal carried by the user, e.g., on a carriable RFID reader 2.

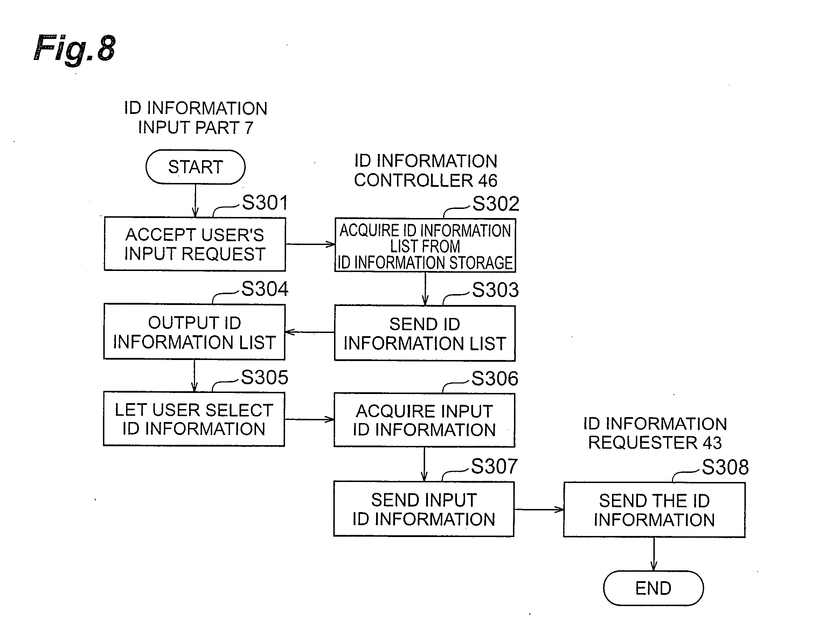

The following will describe the operation of the information managing unit and information managing method according to the present embodiment. Fig. 8 is a drawing showing an example of a procedure for notifying an inquiry target of ID information 11 entered by the user. The user issues an input request signal for input of ID information 11, using the ID information input part 7 (S301). When the ID information controller 46 receives the input request signal from the ID information input part 7, it acquires a list of ID information 11 from the ID information storage 41 (S302). Then the ID information controller 46 notifies the ID information input part 7 of the list of ID information 11 (S303), and the ID information input part 7 outputs the list of ID information 11 to a display device such as a built-in monitor (S304). The user refers to the output information on the display device, such as the monitor, to select ID information 11 that the user desires to search for, out of the list of ID information 11 (S305). The ID information controller 46 acquires the input ID information 11 (S306) and notifies the ID information requester 43 of the ID information 11 (S307). The ID information requester 43 notifies the ID information responder 53 of the receiver ID information managing unit 5 of the ID information 11 (S308).

The following will describe the effect of the information managing method and information managing unit according to the present embodiment. The transmission/reception method of the present embodiment permits the user to specify the ID information 11 stored in the RFID tag 1 attached to an article, for a target that the user desires to search for the article. Therefore, when the user loses the article, the user needs only to specify the ID information 11 for the notification target, but does not have to send any other unnecessary ID information 11 to the notification target, which can reduce the traffic volume on the communication network.

In this embodiment, preferably, the ID information controller 46 notifies the ID information input part 7 of article information associated with the ID information 11 in the ID information storage 41, instead of the ID information 11. In this case, the user does not have to remember the correspondence between the article and ID information 11, which eliminates user's complexity.

### [Fourth Embodiment]

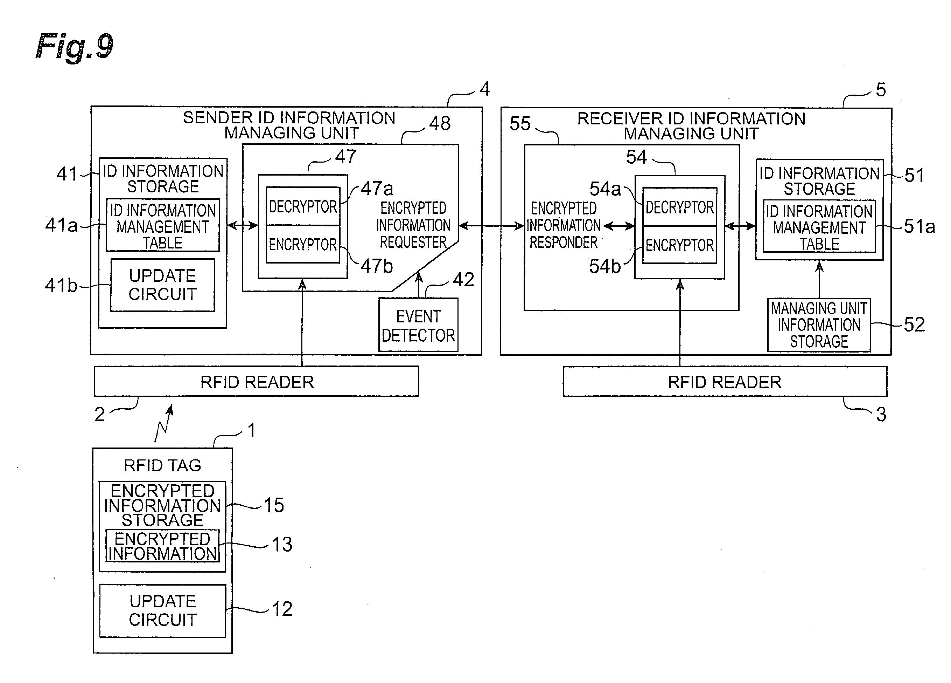

The information managing unit of the fourth embodiment will be described below. The information managing unit of the fourth embodiment is one obtained by changing and adding some portions in comparison with the configuration of the information managing unit according to the above-described first embodiment, and the changed and added portions will be described below. Fig. 9 is a configuration diagram of a system comprised of sender ID information managing unit 4 and receiver ID information managing unit 5 corresponding to the information managing unit of the present embodiment, and peripheral devices thereof. As shown in this Fig. 9, the RFID tag 1 is provided with encrypted information storage 15 storing encrypted information 13 obtained by encrypting ID information 11 by a predetermined encryption method.

The sender ID information managing unit 4 further comprises encrypted information requester 48 for notifying the receiver ID information managing unit 5 of encrypted information 13, which includes decryptor 47a for decrypting encrypted information 13 to obtain ID information 11, and encryptor 47b for encrypting ID information 11 to generate encrypted information 13.

The receiver ID information managing unit 5 further comprises encrypted information responder 55 for receiving a notification from the encrypted information requester 48,which includes decryptor 54a for decrypting encrypted information 13 to obtain ID information 11, and encryptor 54b for encrypting ID information 11 to generate encrypted information 13.

The following will describe the operation of the information managing unit and information managing method according to the present embodiment.

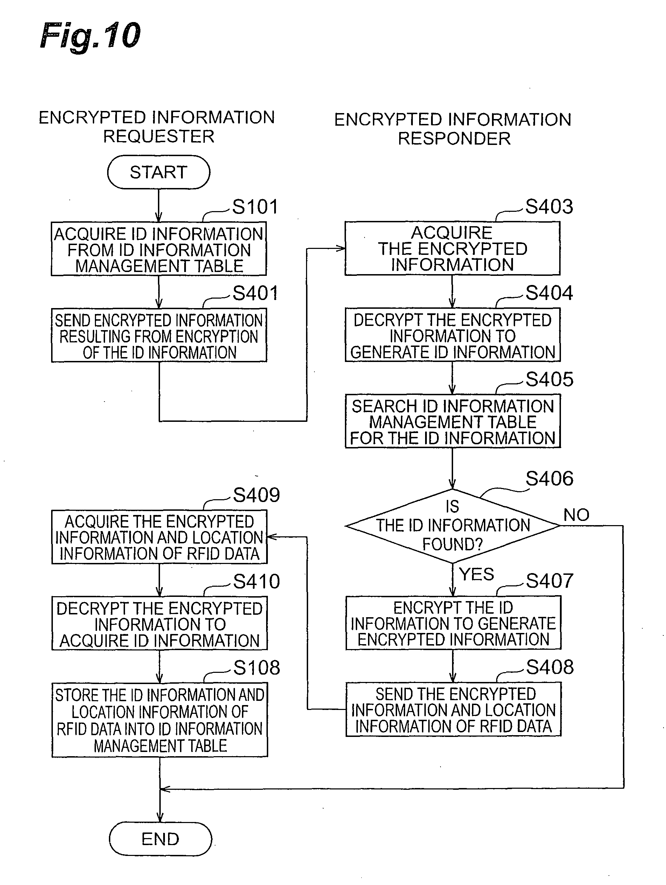

Fig. 10 is a drawing showing an example of a procedure of inquiring of the receiver ID information managing unit 5, using as a key the ID information 11 owned by the sender ID information managing unit 4, and acquiring the managing unit information corresponding to the ID information 11. The below will describe the example using as the managing unit information, the location information of the RFID reader 3 having detected the RFID tag 1 storing encrypted information 13 resulting from encryption of the ID information 11. First, the encrypted information requester 48 acquires ID information 11 from the ID information management table 41a (S101), lets the encryptor 47b encrypt the ID information 11 to generate encrypted information 13, and notifies the encrypted information responder 55 of the receiver ID information managing unit 5 of the encrypted information 13 (S401). The encrypted information responder 55 acquires the encrypted information 13 (S403), and then lets the decryptor 54a decrypt the encrypted information 13 with a decryption key to generate new ID information 11 (S404). Then the encrypted information responder 55 searches the ID information management table 51a, using the generated ID information 11 as a key (S405). When the ID information 11 is present in the ID information management table 51a (Yes in S406), the encrypted information responder 55 acquires the ID information 11 and managing unit information (location information of RFID reader 3 associated with the ID information managing unit 5) from the ID information storage 51, and lets the encryptor 54b encrypt the ID information 11 with an encryption key to generate encrypted information 13 (S407). Then the encrypted information responder 55 notifies the encrypted information requester 48 of the encrypted information 13 and managing unit information (location information of RFID reader 3) (S408). Furthermore, the encrypted information requester 48 acquires the encrypted information 13 and managing unit information (location information of RFID reader 3) (S409), thereafter lets the decryptor 47a decrypt the encrypted information 13 to acquire the ID information 11 (S410), and stores the ID information 11 and managing unit information (location information of RFID reader 3) into the article management table 41a (S108).

Here the decryption key held by the decryptor 47a and the encryption key held by the encryptor 47b are preferably a common key shared by the RFID tag 1 and the RFID reader 2.

The RFID tag 1 periodically alters the encrypted information 13 by means of the update circuit 12 and in this case, the RFID tag 1 and the sender ID information managing unit 4 need to have the common update circuit 12 and update circuit 41b, respectively.

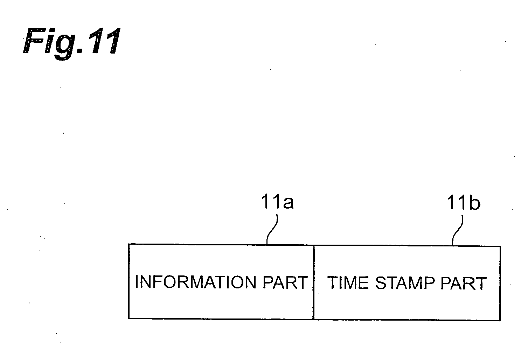

Instead thereof, as shown in Fig. 11, the ID information 11 obtained by decryption of encrypted information 13 is preferably comprised of information part 11a which is a characteristic value for identifying each RFID tag 1, and time stamp part 11b which is information indicating a current time. Among these, the time stamp part 11b is used as a common variable value between arbitrary RFID tag 1 and arbitrary sender ID information managing unit 4, e.g., in units of one second or one minute. This eliminates the need for the common update circuit 12 and update circuit 41b for the RFID tag 1 and the sender ID information managing unit 4. This is because the whole encrypted information 13 appears variable if only part of the ID information 11 (time stamp part 11b herein) is variable.

The following will describe the effect of the information managing method and information managing unit according to the present embodiment. According to the present embodiment, the whole encrypted information 13 held by RFID tag 1 becomes variable as long as the ID information 11 is variable in part somewhere. Therefore, the time stamp part 11b is provided in part of the ID information 11, whereby the privacy is protected for the user carrying the article with the RFID tag 20 storing the ID information even if the part other than the random number part 11b is a fixed value in the ID information 11.

Since the RFID tag 1 and ID information storage 41 do not have to hold the update circuit 12 and the update circuit 41b, respectively, it becomes feasible to keep production cost low for the RFID tag 1 and ID information storage 41.

### [Fifth Embodiment]

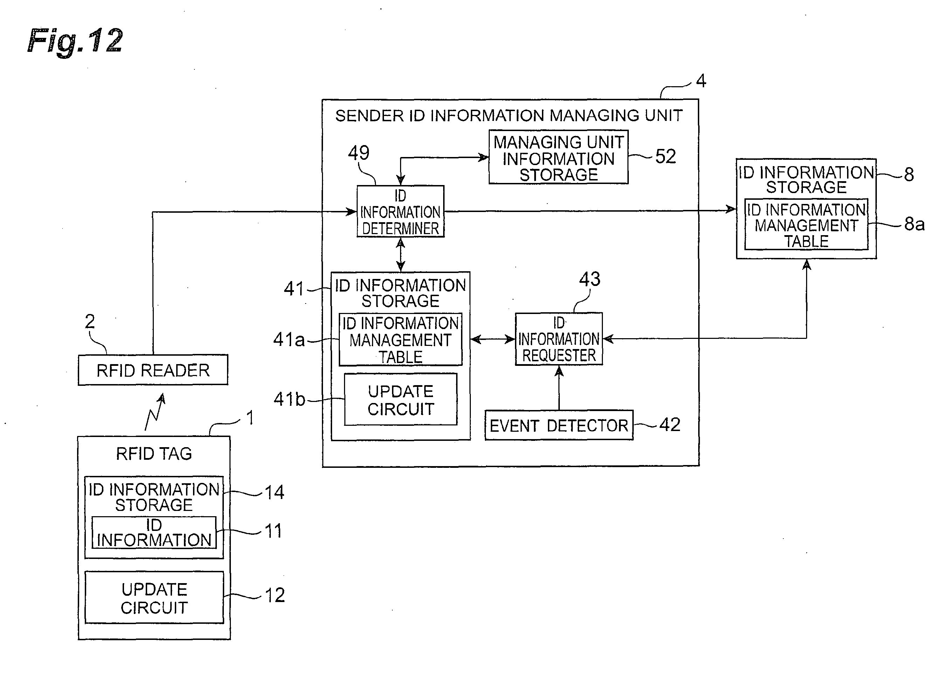

Subsequently, the information managing unit of the fifth embodiment will be described. The information managing unit of the fifth embodiment is one obtained by changing and adding some portions in comparison with the configuration of the information managing unit of the aforementioned first embodiment, and the changed and added portions will be described below. Fig. 12 is a configuration diagram of a system comprised of sender ID information managing unit 4 corresponding to the information managing unit in the present embodiment, and peripheral devices thereof. As shown in this Fig. 12, the sender ID information managing unit 4 further comprises ID information determiner 49 for determining whether ID information 11 detected by RFID reader 2 is stored in the ID information storage 41, and the ID information requester 43 is configured as follows: when the ID information determiner 49 determines that the detected ID information is not stored in the ID information storage 41, the ID information requester 43 notifies an external ID information storage 8 storing the managing unit information in correspondence to the ID information, of the ID information, acquires the ID information and the managing unit information associated with the ID information; from the ID information storage 8, and stores the acquired managing unit information in correspondence to the ID information into the ID information storage 41. The external ID information storage 8 has ID information management table 8a storing ID information 11 and managing unit information in correspondence to each other.

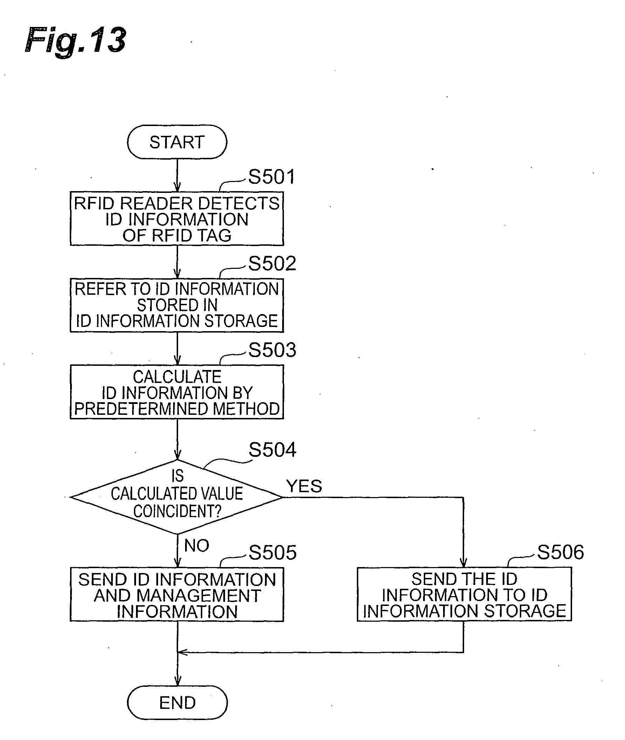

The following will describe the operation of the information managing unit and information managing method according to the present embodiment. Fig. 13 is a drawing showing an example of a processing procedure of ID information 11 detected by RFID reader 2. First, the RFID reader 2 detects ID information 11 stored in an RFID tag 1 (S501), and then the ID information determiner 49 refers to the ID information 11 stored in the ID information storage 41 (S502).

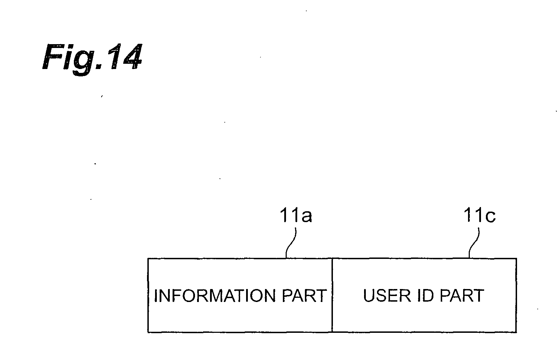

Then the ID information determiner 49 performs a calculation by a predetermined method as described below (S503). A preferred example of the calculation is, for example, to subject the ID information 11 to calculation with a numerical value characteristic to each sender ID information managing unit 4 and to obtain the quotient thereof. If the information stored in the RFID tag 1 is encrypted information 13 instead of the ID information 11 itself, part of the ID information 11 may be a fixed value, and there is thus a method of detecting only user ID part 11c in the ID information 11, as in a configuration example of ID information 11 shown in Fig. 14.

The ID information determiner 49 compares the result of the above calculation with characteristic reference information owned by the sender ID information managing unit 4 (S504). In the case where the encrypted information 13 is used instead of the ID information 11, the user ID part 11 c is inspected in the ID information 11 decrypted by the decryptor 47a, and is compared with the user ID part 11c owned by the sender ID information managing unit 4. When the result of the comparison indicates mutually different values, the ID information 11 is determined not to be owned by the sender ID information managing unit 4 and the ID information storage 8 is notified of the ID information 11 and the managing unit information (S505).

On the other hand, when the result of the comparison in S504 indicates the same value, the ID information 11 is determined to be owned by the sender ID information managing unit 4 and the ID information storage 41 is notified of the ID information 11 (S506).

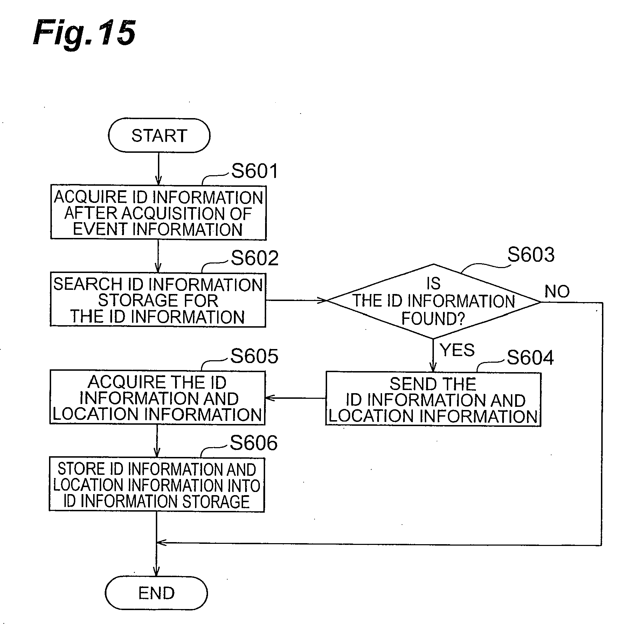

Fig. 15 is a drawing showing an example of a procedure for the sender ID information managing unit 4 to acquire the ID information 11 stored in the ID information storage 8. When the ID information requester 43 acquires event information 42, it acquires ID information from the ID information management table 41a (S601). The ID information requester 43 notifies the ID information storage 8 of the ID information 11 (S602). The ID information storage 8 checks whether the ID information 11 is present in the ID information management table 8a (S603). If it is present, the ID information storage 8 notifies the ID information requester 43 of the ID information 11 and the managing unit information associated with the ID information 11 (S604). When the ID information requester 43 acquires the ID information 11 and managing unit information (S605), it stores the ID information 11 and managing unit information into the ID information storage 41 (S606).

Here the external ID information storage 8 is preferably configured as follows: it also manages information of detection time when a third-party RFID reader 3 detects the ID information 11, in addition to the ID information 11 and the managing unit information. This permits, for example, the ID information 11 managed in the ID information storage 8 to be erased from in the ID information storage 8 after a lapse of a predetermined time, which can ensure the scalability of the ID information storage 60. When the managing unit information is location information where a third-party RFID reader 3 detects ID information 11, the user as an owner of an article with an RFID tag 1 storing the ID information 11 can find out when and where the article was located.

The following will describe the effect of the information managing method and information managing unit according to the present embodiment. The present embodiment enables the ID information 11 not owned by the sender ID information managing unit 4 to be automatically notified of by the ID information determiner 49. In addition, since the places of notification and acquisition of ID information 11 are set together in one place of ID information storage 8, there is no need for cumbersome operation such as an inquiry to another receiver ID information managing unit 5. Since there is no need for inquiries to a plurality of receiver ID information managing units 5, the traffic volume on the communication network can be reduced.

### [Sixth Embodiment]

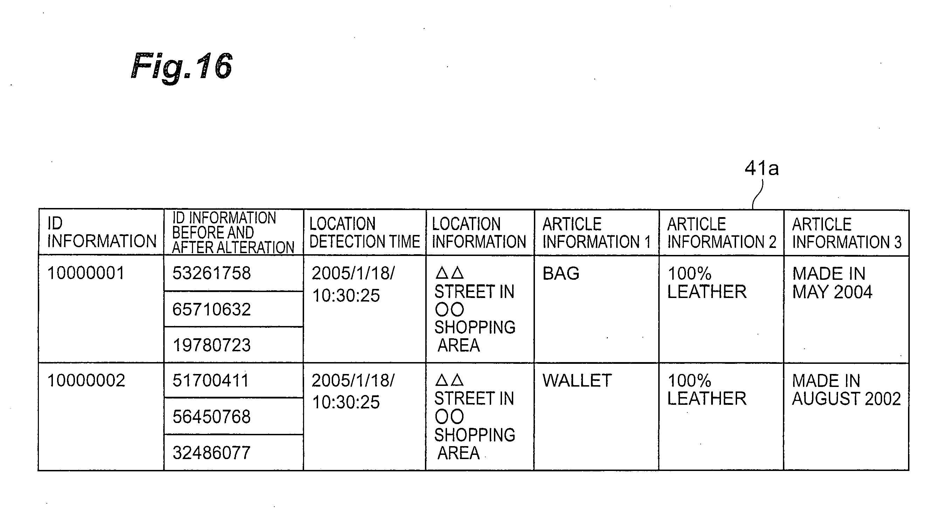

Subsequently, the information managing unit of the sixth embodiment will be described. The information managing unit of the sixth embodiment is one obtained by changing and adding some portions in comparison with the configuration of the information managing unit of the aforementioned first embodiment, and the changed and added portions will be described below. Fig. 16 is a drawing showing an example of ID information management table 41 a in the present embodiment. In the present embodiment, as shown in this Fig. 16, the ID information management table 41 a manages each ID information 11, pieces of ID information up to several steps before alteration of the ID information 11, and pieces of ID information up to several steps after alteration of the ID information 11 in correspondence to each other.

According to the information managing method in the present embodiment, when the ID information requester 43 receives event information 42, it notifies the ID information responder 53 of ID information 11, pieces of ID information up to several steps before alteration of the ID information 11, and pieces of ID information up to several steps after alteration of the ID information 11, which are stored in the ID information management table 41 a. The ID information responder 53 checks whether the ID information 11 or the ID information group before and after alteration is stored in the ID information storage 51. The ID information responder 53 notifies the ID information requester 43 of the ID information 11 (or the ID information before and after alteration) and the managing unit information found as a result of the check. The ID information requester 43 stores the ID information 11 (or the ID information before and after alteration) and the managing unit information into the ID information storage 41.

The following will describe the effect of the information managing method according to the present embodiment. The present embodiment permits us to avoid, to some extent, an error between ID information 11 notified of by the sender ID information managing unit 4 and ID information 11 detected by the receiver ID information managing unit 5, which is caused by updating of ID information 11 held by the same RFID tag 1 every time or every event. Therefore, loss of chances of finding can be prevented to some extent in the case where even though the receiver ID information managing unit 5 detects the ID information 11 of the same RFID tag 1, it is regarded as different ID information 11 because of the updating of the ID information 11 every time or every event. In addition, there is no need for notifying the receiver ID information managing unit 5 of periodically varying ID information 11 upon every update, which can reduce the communication traffic volume.

### Industrial Applicability

The present invention is applicable to the information managing unit and information managing method and facilitates the user's search for a lost article while ensuring the privacy of the user.

## Claims

1. An information managing unit comprising:
an ID information storage for receiving and storing detected ID information from an RFID reader for detecting, from an RFID tag holding variable ID information, the ID information, and for updating and managing the stored ID information in synchronization with the variable ID information held by the RFID tag, by a predetermined method;
an event detector for detecting an event to be a trigger to notify an other information managing unit of the ID information stored in the ID information storage; and
an ID information requester for notifying the other information managing unit of the ID information when the event detector detects the event, for acquiring the ID information and predetermined managing unit information about the other information managing unit from the other information managing unit, and for storing the acquired managing unit information in correspondence to the ID information into the ID information storage.

2. The information managing unit according to claim 1, further comprising:
an inquiry target storage for storing input inquiry target information; and
an inquiry target controller for notifying the ID information requester of ID information and the inquiry target information stored in the inquiry target storage, in correspondence to each other, thereby requesting an inquiry to the inquiry target.

3. The information managing unit according to claim 1, further comprising an ID information controller for notifying the ID information requester of input ID information,
wherein the ID information requester notifies the other information managing unit of the ID information notified of by the ID information controller.

4. The information managing unit according to claim 1, wherein the ID information received from the RFID reader is encrypted ID information resulting from encryption of the ID information,
wherein the ID information requester comprises:
a decryptor for decrypting the received encrypted ID information to acquire the ID information; and
an encryptor for encrypting the ID information decrypted by the decryptor, to acquire encrypted ID information,
wherein when the event detector detects the event, the ID information requester notifies the other information managing unit of the encrypted ID information encrypted by the encryptor, acquires the encrypted ID information and predetermined managing unit information about the other information managing unit from the other information managing unit, and stores the acquired managing unit information in correspondence to the ID information obtained by decryption of the acquired encrypted ID information by the decryptor, into the ID information storage.

5. The information managing unit according to claim 1, further comprising an ID information determiner for determining whether the ID information detected by the RFID reader is stored in the ID information storage,
wherein when the ID information determiner determines that the detected ID information is not stored in the ID information storage, the ID information requester notifies an external ID information storage device storing the managing unit information in correspondence to the ID information, of the ID information, acquires the ID information and the managing unit information associated with the ID information from the external ID information storage device, and stores the acquired managing unit information in correspondence to the ID information into the ID information storage.

6. The information managing unit according to claim 1,
wherein the ID information storage further stores predetermined multiple-generation pieces of ID information in updates of the variable ID information, in correspondence to the ID information, and
wherein the ID information requester notifies the ID information responder of the ID information and the multiple-generation pieces of ID information.

7. An information managing unit comprising:
an ID information storage for receiving and storing detected ID information from an RFID reader for detecting, from an RFID tag holding variable ID information, the ID information;
a managing unit information storage for storing predetermined managing unit information about the host information managing unit; and
an ID information responder for, when ID information is notified of by an other information managing unit, checking whether the ID information is stored in the ID information storage, and for, when the ID information is stored, notifying the other information managing unit of the managing unit information stored in the managing unit information storage, and the ID information.

8. The information managing unit according to claim 7, wherein the ID information received from the RFID reader is encrypted ID information resulting from encryption of the ID information,
wherein the ID information responder further comprises:
a decryptor for decrypting the received encrypted ID information to acquire the ID information; and
an encryptor for encrypting the ID information decrypted by the decryptor, to acquire encrypted ID information,
wherein when the encrypted ID information is notified of by the other information managing unit, the ID information responder decrypts the encrypted ID information by the decryptor to acquire the ID information, and checks whether the ID information is stored in the ID information storage, and, when the ID information is stored, the ID information responder notifies the other information managing unit of the managing unit information stored in the managing unit information storage and the encrypted ID information obtained by encryption by the encryptor.

9. An information managing method in an information managing unit with an ID information storage for receiving and storing detected ID information from an RFID reader for detecting, from an RFID tag holding variable ID information, the ID information and for updating and managing the stored ID information in synchronization with the variable ID information held by the RFID tag, by a predetermined method, the information managing method comprising:
an event detecting step of detecting an event to be a trigger to notify an other information managing unit of the ID information stored in the ID information storage;
an ID information notifying step of, when the event is detected in the event detecting step, notifying the other information managing unit of the ID information;
a managing unit information acquiring step of acquiring the ID information, and predetermined managing unit information about the other information managing unit from the other information managing unit; and
a managing unit information storing step of storing the acquired managing unit information in correspondence to the ID information into the ID information storage:

10. An information managing method in an information managing unit with an ID information storage for receiving and storing detected ID information from an RFID reader for detecting, from an RFID tag holding variable ID information, the ID information, and a managing unit information storage for storing predetermined managing unit information about the host information managing unit, the information managing method comprising:
a checking step of, when ID information is notified of by an other information managing unit, checking whether the ID information is stored in the ID information storage; and
an ID information responding step of, when the ID information is stored, notifying the other information managing unit of the managing unit information stored in the managing unit information storage, and the ID information.
